# EUROPÄISCHE PATENTANMELDUNG

(11) **EP 0 793 074 A1**
(43) Veröffentlichungstag der Anmeldung: **03.09.1997**
(21) Anmeldenummer: 97200508.6
(22) Anmeldetag: 24.02.1997
(51) Int. Cl.: G01C 21/20, G08G 1/0969, G09B 29/10

(54) **Verfahren und Anordnung zum Darstellen einer Landkarte**

(30) Priorität: 02.03.1996 DE 19608067
(71) Anmelder: Philips Patentverwaltung GmbH, 22335 Hamburg (DE); Philips Electronics N.V., 5621 BA Eindhoven (NL)
(72) Erfinder: van Roekel, Jauke, Röntgenstrasse 24, 22335 Hamburg (DE)
(74) Vertreter: Poddig, Dieter, Dipl.-Ing.

(57) **Zusammenfassung**

Die Darstellung von Landkarten aus gespeicherten digitalen Daten insbesondere für ein Fahrzeug-Navigationssystem erfolgt allgemein in einem konstanten Maßstab. Wenn dieser Maßstab beispielsweise bei einem Stadtplan derart gewählt ist, daß der Fahrer die momentane Straßenführung genau erkennen kann, ist eine Übersicht über weiter entfernte Teile der Karte nicht möglich, während auf einer Übersichtsdarstellung die momentane Fahrroute beispielsweise innerhalb einer Stadt oder an einer mehrfachen Einmündung von Straßen in eine Landstraße nicht erkennbar sind. Erfindungsgemäß wird vorgeschlagen, den Bereich um die momentane Position des Fahrzeugs mit einem kleinen Maßstabsfaktor detailliert darzustellen, während weiter entfernte Bereiche der Karte mit einem großen Maßstabsfaktor dargestellt werden. Der erstere Bereich wird zweckmäßig mit einem konstanten Maßstabsfaktor dargestellt, während die weiter entfernten Bereiche mit einem zunehmend größeren Maßstabsfaktor dargestellt werden.

## Beschreibung

Die Erfindung betrifft ein Verfahren zum Darstellen einer Landkarte auf einer Darstellungsanordnung aus digitalen Daten sowie eine Anordnung zur Durchführung eines derartigen Verfahrens.

Verfahren zum Darstellen von Landkarten werden häufig in Fahrzeugen verwendet, um den Fahrer zu unterstützen, die richtige oder die optimale Fahrtroute zu finden. Wenn es sich um einen Stadtplan handelt, wird die Landkarte mit einem sehr kleinen Maßstabsfaktor dargestellt. um die unmittelbar vor dem Fahrer liegende Straßenführung mit Abzweigungen und Einmündungen möglichst genau darzustellen. Dabei ist selbstverständlich kein weiterer Überblick über die weiter vorausliegende Fahrtroute möglich. Wenn die Landkarte jedoch bei Fahrten über weite Strecken eine Landstraße oder gar eine Autobahn zeigen soll, wird ein größerer Maßstab verwendet, da in diesem Fall Details der Straßenführung wesentlich weiter voneinander entfernt liegen.

Häufig hat der Fahrer jedoch den Wunsch, beispielsweise bei Stadtfahrten einen größeren Teil der Strecke überschauen zu können, als momentan angezeigt wird. Entsprechend ist es auch bei Fahrten über Land manchmal zweckmäßig, genauere Details der Straßenführung darzustellen, wenn beispielweise mehrere Abzweigungen oder Einmündungen eng beieinander liegen. Grundsätzlich besteht die Möglichkeit, den Maßstabsfaktor, mit dem die Landkarte dargestellt wird, durch Einstellung von Hand zu verändern. Dies hat jedoch Nachteile, insbesondere wenn sich der Fahrer allein im Fahrzeug befindet, da eine Veränderung der Darstellung der Landkarte durch eine Einstellung von Hand die Aufmerksamkeit des Fahrers noch mehr vom Verkehr ablenkt, als dies bei einem kurzen Blick auf eine Landkarte der Fall ist.

Aufgabe der Erfindung ist es daher, ein Verfahren anzugeben, daß besonders für Fahrzeuge geeignet ist und einem Benutzer sowohl Details als auch Übersichten zur Verfügung stellt.

Diese Aufgabe wird erfindungsgemäß gelöst, indem ein vorgegebener Bereich der Landkarte um einen vorgegebenen Punkt darauf stark vergrößert, d.h. mit einem kleinen Maßstabsfaktor dargestellt wird, während weiter entfernte Bereiche kleiner, d.h. mit einem größeren Maßstabsfaktor dargestellt werden.

Es ist grundsätzlich bekannt, bei gedruckten Stadtplänen den Innenbereich einer Stadt mit einem etwas kleineren Maßstabsfaktor darzustellen als die Außenbezirke, da der Innenbereich einer Stadt häufig mehr Details enthält, z.B. enger benachbarte schmale Straßen mit vielen Verzweigungen und Einmündungen. Dabei unterscheidet sich der Maßstabsfaktor für die Darstellung des Zentrums einer Stadt und deren Außenbezirke aber nur wenig, und die Darstellung ist durch den Druck der Karte zwangsläufig festgelegt.

Zweckmäßig ist bei dem erfindungsgemäßen Verfahren, wenn der vorgegebene Bereich in einem konstanten Maßstabsfaktor und darüber hinausgehende Teile mit zunehmend steigendem Maßstabsfaktor abgebildet werden. Dadurch wird beispielsweise der Punkt, an dem sich der Fahrer befindet, in einem gewohnten konstanten Maßstabsfaktor abgebildet, während Teile der Landkarte für weiter entfernte Gebiete mit geringeren Details dargestellt werden, da diese normalerweise nicht von Interesse sind.

Eine Anordnung zum Darstellen einer Landkarte nach dem erfindungsgemäßen Verfahren weist eine Darstellungsanordnung und eine Steueranordnung zum Umwandeln von digitalen, die die Landkarte repräsentieren, in Steuersignale zur Ansteuerung der Darstellungsanordnung auf. Die Steueranordnung wird zweckmäßig durch eine Rechenanordnung wie ein Mikrocomputer realisiert. Dabei weist die Steueranordnung Mittel auf. um die digitalen Daten derart umzuwandeln, daß der Bereich um den vorgegebenen Punkt groß mit einem kleinen Maßstabsfaktor und der übrige Bereich mit größeren Maßstabsfaktoren dargestellt wird. Zu diesem Zweck geben die digitalen Daten vorzugsweise die Landkarte in Form von Vektoren an. Bei Verwendung der Anordnung in einem Fahrzeug sind diese Daten zweckmäßig im Fahrzeug gespeichert, z.B. auf einem CD-ROM-Datenträger.

Ausführungsbeispiele der Erfindung werden nachfolgend anhand der Zeichnung näher erläutert. Es zeigen:
- Fig. 1: schematisch die Darstellung einer Landkarte auf einer Darstellungsanordnung mit unterschiedlichen Maßstabsfaktoren für verschiedene Bereiche,
- Fig. 2: den Verlauf des Maßstabsfaktors in Abhängigkeit von einem bestimmten Punkt auf der Karte,
- Fig. 3: schematisch eine Anordnung zur Darstellung einer Landkarte mit variierendem Maßstabsfaktor.

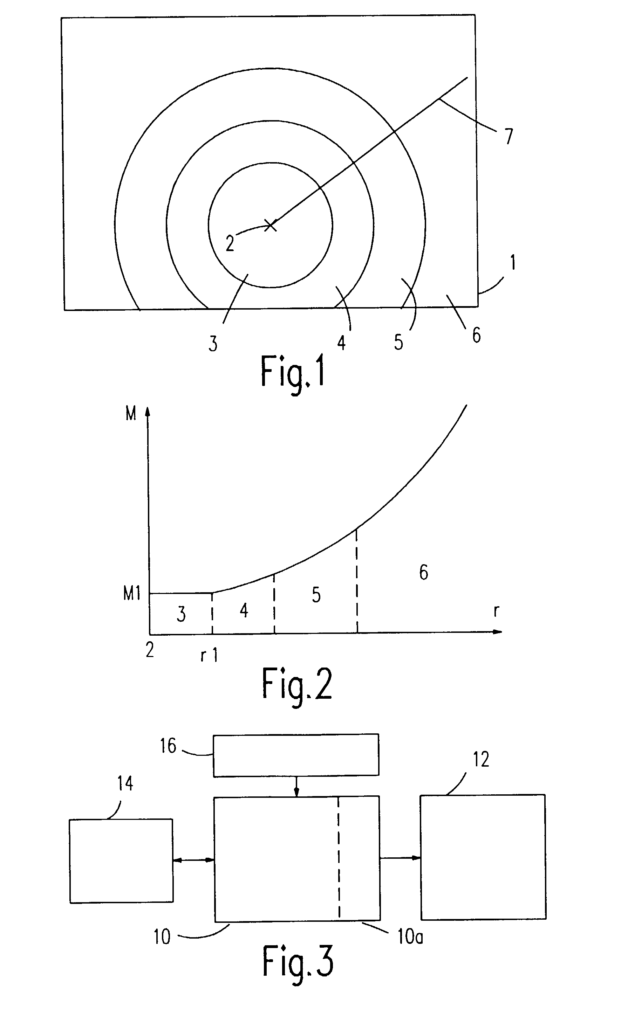

In Fig. 1 ist auf einer Darstellungsfläche 1 einer Darstellungsanordnung eine Landkarte dargestellt, die hier nicht näher gezeigt ist, sondern es sind nur verschiedene Bereiche 3, 4, 5 und 6 um einen Punkt 2 auf dieser Landkarte angedeutet. Der Punkt 2 stellt den momentanen Ort eines Fahrzeugs dar, in dem die Darstellungsfläche 1 angeordnet ist.

Der Bereich 3 um den Punkt 2 herum wird sehr groß, d.h. mit einem kleinen Maßstabsfaktor dargestellt, so daß die momentan befahrene Straße und unmittelbar davor liegende Verzweigungen und Einmündungen deutlich erkennbar sind. Bei einer Landkarte für ein Gebiet außerhalb einer Stadt kann im Extremfall für den Bereich 3 ein etwa gleicher Maßstabsfaktor wie für einen Stadtplan angewendet werden, so daß auch unübersichtliche Verzweigungen oder Einmündungen einer befahrenen Landstraße deutlich dargestellt werden. Der Bereich 4, der an den Bereich 3 angrenzt, ist mit einem größeren Maßstabsfaktor dargestellt und zeigt beispielsweise mehrere vorausliegende Einmündungen der gerade befahrenen Straße. Der daran anschließende Bereich 5 zeigt vorzugsweise die gesamte Stadt oder den Stadtteil, in dem sich der Punkt 2 befindet, während der Bereich 6 beispielsweise die Außenbezirke einer Stadt mit Zufahrten zu Autobahnen darstellt.

Die Bereiche 3 bis 6 sind hier kreisförmig dargestellt, jedoch ist es klar, daß diese auch andere Formen haben können, beispielsweise oval in der momentanen Fahrtrichtung oder auch ungefähr rechteckig.

Die Übergänge zwischen den einzelnen Bereichen sind zweckmäßig nicht sprungförmig, da in diesem Falle die Darstellung unübersichtlich werden könnte, sondern der Bereich 3 ist vorzugsweise in einem konstanten Maßstab dargestellt, während vom Übergang zum Bereich 3 der Maßstabsfaktor größer wird und bis zum Bereich 6 ansteigt, vorzugsweise quadratisch oder gar exponentiell.

Ein solcher Verlauf des Maßstabsfaktors über einen Vektor 7, der vom Punkt 2 zum Rand der Darstellungsfläche 1 geht, ist in Fig. 2 angedeutet. Vom Punkt 2 bis zu einem Radius r1, der die Grenze des inneren Bereichs 3 angibt, wird ein konstanter Maßstabsfaktor M1 verwendet. Von der Grenze r1 an steigt der Maßstabsfaktor über die Bereiche 4, 5 und 6 stetig an. Mit einem solchen Verlauf des Maßstabsfaktors kann eine Landkarte sehr übersichtlich und dennoch im Zentrum detailliert dargestellt werden. Da in einem Fahrzeug die Stelle, an der sich das Fahrzeug momentan auf der Landkarte befindet, bekannt ist und diese Stelle sich bei Bewegung des Fahrzeugs ständig ändert, wandert die in Fig. 1 angedeutete Einteilung in Bereiche quasi über die Landkarte. Statt dessen kann auch der momentane Punkt des Fahrzeugs auf der Darstellungsfläche 1 im wesentlichen konstant gehalten werden, während die Landkarte sich über die Darstellungsfläche 1 mit entsprechend sich veränderndem Maßstabsfaktor bewegt.

Eine Anordnung zur Durchführung des vorstehend beschriebenen Verfahrens ist in Fig. 3 angedeutet. Diese enthält eine Steueranordnung 10, die einen Rechner bzw. einen Mikrocomputer enthält. Daran ist eine Speicheranordnung 14 angeschlossen, vorzugsweise ein CD-ROM-Leser mit einem entsprechenden Datenträger darin, der digitale Daten für einen wesentlich größeren Bereich der Landkarte enthält, als momentan auf der Darstellungsfläche dargestellt wird. Die Auswahl der aus der Speicheranordnung 14 auszulesenden Daten für einen gewünschten darzustellenden Bereich der Landkarte erfolgt über die Steueranordnung 10 und über eine Eingabeanordnung 16 durch eine Bedienungsperson und während der Fahrt insbesondere durch eine Einrichtung zur Ermittlung der momentanen Position des Fahrzeugs, die ebenfalls in der Eingabeanordnung 16 enthalten ist. Die Speicheranordnung 14 überträgt die gemäß diesen Auswahlkommandos ausgelesenen Daten zur Steueranordnung 10, die diese in Steuersignale für eine Darstellungsanordnung 12 umwandelt. Die Steueranordnung 10 enthält insbesondere einen Teil 10a, in dem diese Steuersignale nichtlinear verzerrt werden, so daß der Bereich um die momentane Position herum, die von der Eingabeanordnung 16 geliefert wurde, mit einem kleinen Maßstabsfaktor und die weiter entfernt liegenden Bereiche des ausgewählten Teils der Landkarte mit zunehmend größerem Maßstabsfaktor dargestellt werden.

## Patentansprüche

1. Verfahren zum Darstellen einer Landkarte auf einer Darstellungsanordnung aus digitalen Daten, wobei die Landkarte bezogen auf einen vorgegebenen Punkt auf der Landkarte derart nichtlinear dargestellt wird, daß ein vorgegebener Bereich der Landkarte um den vorgegebenen Punkt mit einem kleineren Maßstabsfaktor dargestellt wird als der übrige Teil der Landkarte.

2. Verfahren nach Anspruch 1, wobei der vorgegebene Bereich in einem konstanten Maßstabsfaktor und die darüber hinausgehenden Teile der Landkarte mit einem abhängig von der Entfernung vom vorgegebenen Bereich steigenden Maßstabsfaktor abgebildet werden.

3. Verfahren nach Anspruch 2, wobei der steigende Maßstabsfaktor lichtlinear, vorzugsweise quadratisch steigt.

4. Verfahren nach Anspruch 1 für die Darstellung in einem Fahrzeug, wobei während der Bewegung des Fahrzeugs die Veränderung der Lage des Punktes auf der Landkarte ermittelt wird und die Darstellung der Landkarte wiederholt bezogen auf die momentane Lage des Punktes aktualisiert wird.

5. Anordnung zum Darstellen einer Landkarte auf einer Darstellungsanordnung zum Durchführen des Verfahrens nach einem der Ansprüche 1 bis 4, mit einer Steueranordnung zum Umwandeln von digitalen Daten, die die Landkarte repräsentieren, in Steuersignale zur Ansteuerung der Darstellungsanordnung, wobei die Steueranordnung Mittel aufweist, um die digitalen Daten derart umzuwandeln, daß ein vorgegebener Bereich der Landkarte um einen vorgegebenen Punkt auf der Landkarte mit einem kleineren Maßstabsfaktor dargestellt wird als der übrige Teil der Landkarte.

6. Anordnung nach Anspruch 5 mit einem Speicher zur Speicherung von digitalen Daten, die die Landkarte repräsentieren.
